# EUROPEAN PATENT APPLICATION

(11) **EP 4 730 515 A1**
(43) Date of publication of application: **22.04.2026**
(21) Application number: 24880108.6
(22) Date of filing: 16.10.2024
(51) Int. Cl.: H01M 50/213, H01M 50/291, H01M 10/6568, H01M 10/613, H01M 50/249, H01M 10/6567

(54) **BATTERY ASSEMBLY**

(30) Priority: 18.10.2023 KR 20230139864; 30.05.2024 KR 20240070992
(71) Applicant: LG Energy Solution, Ltd., Seoul 07335 (KR)
(72) Inventor: CHUNG, Jae-Heon, Daejeon 34122 (KR); CHOI, Bum, Daejeon 34122 (KR); PARK, Jong-Hee, Daejeon 34122 (KR); KWON, Jung-Geun, Daejeon 34122 (KR); KIM, Gae-Sung, Daejeon 34122 (KR); JUNG, Min-Yong, Daejeon 34122 (KR); CHOI, Seung-Bin, Daejeon 34122 (KR)
(74) Representative: Plasseraud IP
(86) International application number: PCT/KR2024/015667
(87) International publication number: WO 2025/084771

(57) **Abstract**

Disclosed is a battery assembly. The battery assembly includes a battery assembly, which includes a frame providing an internal space and having an open top; a partition plate located inside the frame and configured to divide the internal space into an upper space and a lower space; a battery cell configured to penetrate the partition plate in an upper and lower direction; and a top cover configured to cover the upper space and coupled to the frame.

## Description

### TECHNICAL FIELD

The present disclosure relates to a battery assembly.

This application is based on and claims priority from Korean Patent Application No. 10-2023-0139864, filed on October 18, 2023, and Korean Patent Application No. 10-2024-0070992, filed on May 30, 2024, with the Korean Intellectual Property Office, the disclosure of which is incorporated herein in its entirety by reference.

### BACKGROUND ART

As the demand for portable electronic products such as laptops, video cameras, and portable phones is rapidly increasing, and robots, electric vehicles, or the like are commercialized in earnest, research on high-performance secondary batteries capable of repeated charging and discharging is actively underway.

Currently, commercially available secondary batteries include nickel-cadmium batteries, nickel-hydrogen batteries, nickel-zinc batteries, lithium secondary batteries and the like, and among them, lithium secondary batteries have little or no memory effect, and thus they are gaining more attention than nickel-based secondary batteries for their advantages that recharging can be done whenever it is convenient, the self-discharge rate is very low and the energy density is high.

Lithium secondary batteries primarily comprise lithium-based oxides and carbon materials for a positive electrode active material and a negative electrode active material, respectively. A lithium secondary battery includes an electrode assembly including a positive electrode plate and a negative electrode plate coated with the positive electrode active material and the negative electrode active material, respectively, with a separator interposed between the positive electrode plate and the negative electrode plate, and a sealed packaging or battery case accommodating the electrode assembly together with an electrolyte solution.

In general, lithium secondary batteries may be classified into can-type secondary batteries in which the electrode assembly is included in a metal can and pouch-type secondary batteries in which the electrode assembly is included in a pouch of an aluminum laminate sheet, according to the shape of the battery case.

Recently, secondary batteries have been widely used in medium and large devices such as electric vehicles and energy storage systems (ESSs) for driving and storing energy, as well as in small devices such as portable electronic devices. A plurality of secondary batteries may be electrically connected and stored inside a module case, thereby forming a battery module. In addition, multiple battery modules may be connected to each other to form a battery pack.

However, if a plurality of secondary batteries (battery cells) or a plurality of battery modules are crowded in a small space, they may be vulnerable to thermal events. In particular, if an event such as thermal runaway occurs in one battery cell, high temperature gas, flame, or heat may be generated. If the gases, flames, heat, etc. is transferred to other battery cells included in the same battery module, an explosive chain reaction situation such as thermal propagation may occur. Also, this chain reaction not only causes accidents such as fire or explosion in the corresponding battery module, but may also cause fire or explosion in other battery modules.

Therefore, it is necessary to effectively cool the battery cells to suppress thermal events or heat propagation of the temperature of the battery cells. In addition, it is necessary to improve the performance of the battery module or battery pack by reducing the temperature deviation between the plurality of battery cells.

### DISCLOSURE

### Technical Problem

The present disclosure is designed to solve these and other problems.

The present disclosure is also directed to providing a structure capable of rapidly cooling the temperature of a battery assembly.

The present disclosure is also directed to providing a structure capable of reducing the temperature deviation of a plurality of battery cells.

The present disclosure is also directed to improving the electrical safety of the battery assembly.

The present disclosure is also directed to improving the assemblability of battery assembly.

### Technical Solution

In one aspect of the present disclosure, there is provided a battery assembly comprising: a frame providing an internal space and having an open top; a partition plate located inside the frame and configured to divide the internal space into an upper space and a lower space; a battery cell configured to penetrate the partition plate in an upper and lower direction; and a top cover configured to cover the upper space and coupled to the frame.

In addition, the partition plate may have a communication hole that communicates the upper space and the lower space.

In addition, the battery cell may be provided in plurality, and the communication hole may be located outside a battery cell located at an outermost side among the plurality of battery cells.

In addition, the battery assembly may further comprise a lower port coupled to the frame and configured to communicate with the lower space.

In addition, the battery assembly may further comprise an upper port coupled to the frame and configured to communicate with the upper space.

In addition, the battery assembly may further comprise a cooling medium flowing through the internal space, and a flowing direction of a cooling medium flowing in the upper space and a flowing direction of a cooling medium flowing in the lower space may be formed in opposite directions.

In addition, the partition plate may have a first insert hole through which the battery cell penetrates, and the battery assembly may further comprise a first resin layer that seals between the battery cell and the first insert hole.

In addition, the first resin layer may cover an upper surface of the partition plate and extend to seal between the partition plate and the frame.

In addition, the top cover may have a second insert hole through which the battery cell penetrates, and the battery assembly may further comprise a second resin layer that seals between the battery cell and the second insert hole.

In addition, the second resin layer may cover an upper surface of the top cover and extend to seal between the top cover and the frame.

In addition, the frame may include a base plate; and a peripheral wall protruding upward from an upper surface of the base plate, and the partition plate and the top cover may be coupled to the peripheral wall.

In addition, the peripheral wall may include a first coupling portion protruding inwardly and coupled with the top cover; and a second coupling portion protruding further inwardly than the first coupling portion and coupled with the partition plate.

In addition, the first coupling portion and the second coupling portion may extend along a perimeter of the base plate.

In addition, the top cover may be configured to have a larger area than the partition plate.

A vehicle according to one aspect of the present disclosure may include the battery assembly of the present disclosure.

### Advantageous Effects

According to at least one of the embodiments of the present disclosure, the cooling efficiency of the battery assembly may be improved.

According to at least one of the embodiments of the present disclosure, the temperature deviation of a plurality of battery cells may be reduced.

According to at least one of the embodiments of the present disclosure, the electrical safety of the battery assembly may be improved.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a drawing showing a battery assembly according to an embodiment of the present disclosure.
FIG. 2 is a drawing showing the battery assembly of FIG. 1, in which some components are exploded.
FIG. 3 is a drawing showing a partition plate of the battery assembly of FIG. 2.
FIG. 4 is an enlarged drawing of part E of FIG. 3.
FIGS. 5 and 6 are drawings showing a partial cross-sectional configuration along the cutting line A-A' of FIG. 1.
FIGS. 7 and 8 are drawings showing a partial cross-sectional configuration along the cutting line B-B' of FIG. 1.
FIGS. 9 and 10 are drawings showing a partial cross-sectional configuration along the cutting line D-D' of FIG. 1.
FIG. 11 is a drawing showing a top cover of the battery assembly of FIG. 2.
FIGS. 12 and 13 are drawings showing a partial cross-sectional configuration along the cutting line C-C' of FIG. 1.
FIGS. 14 and 15 are drawings showing a partial cross-sectional configuration along the cutting line C-C' of FIG. 1.
FIGS. 16 and 17 are drawings showing a partial cross-sectional configuration along the cutting line D-D' of FIG. 17.
FIG. 18 is a drawing showing a cross-sectional configuration along the cutting line C-C' of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the description proposed herein is just a preferable example for the purpose of illustrations only, not intended to limit the scope of the disclosure, so it should be understood that other equivalents and modifications could be made thereto without departing from the scope of the disclosure.

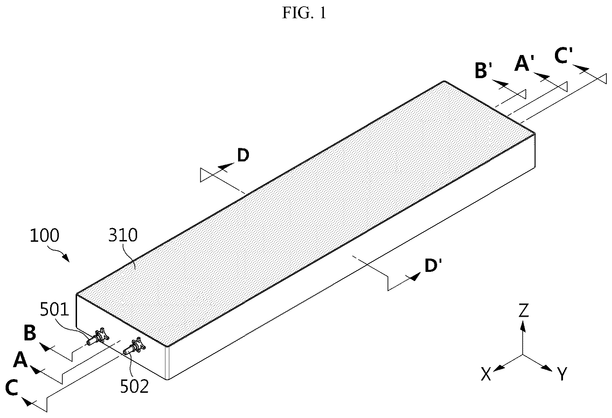

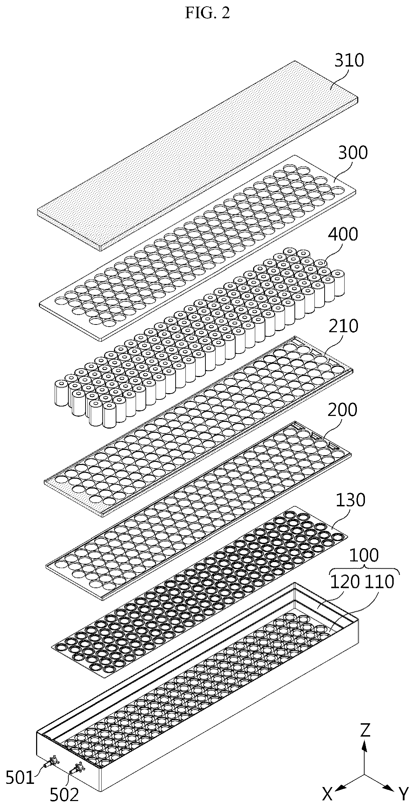

FIG. 1 is a drawing showing a battery assembly according to an embodiment of the present disclosure. FIG. 2 is a drawing showing the battery assembly of FIG. 1, in which some components are exploded. Referring to FIGS. 1 and 2, the battery assembly according to an embodiment of the present disclosure may include a frame 100, a partition plate 200, a battery cell 400 and a top cover 300.

The frame 100 may provide a space therein. The frame 100 may form the exterior of the battery assembly. The frame 100 may have a shape with an open top. In addition, the frame 100 may have a rectangular parallelepiped shape.

The partition plate 200 may be located inside the frame 100. The partition plate 200 may divide the internal space into an upper space US and a lower space LS.

The battery cell 400 may be located inside the frame 100. In addition, the battery cell 400 may penetrate the partition plate 200 in the upper and lower direction. At this time, at least a part of the battery cell 400 may be positioned in the lower space LS. In addition, at least a part of the battery cell 400 may be positioned in the upper space US.

At this time, the battery cell 400 may mean a secondary battery. The battery cell 400 may have a cylindrical shape. However, the shape of the battery cell 400 is not limited thereto, and may have various shapes such as a pouch shape and a rectangular parallelepiped shape.

In addition, the battery cell 400 may be provided in plurality. The plurality of battery cells 400 may form a battery array. The plurality of battery cells 400 may be arranged to form rows and columns.

The top cover 300 may be coupled, fastened, attached, fixed or assembled to the frame 100. The top cover 300 may cover the upper space US. The top cover 300 may have a plate shape. The top cover 300 may cover the open part of the frame 100.

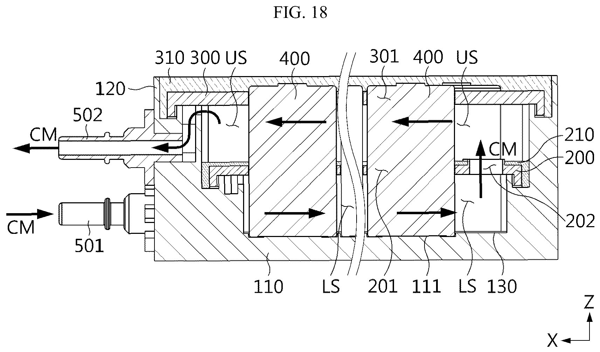

According to this configuration of the present disclosure, the cooling efficiency of the battery assembly may be improved. A cooling medium CM (see FIG. 18) may flow in the lower space LS and the upper space US. In addition, the cooling medium CM may be in direct contact with the battery cell 400. As a result, the cooling efficiency of the battery cell 400 may be improved.

In addition, according to this configuration of the present disclosure, the cooling deviation of the plurality of battery cells 400 may be reduced. In addition, the thermal resistance deviation of the plurality of battery cells 400 may be reduced. The cooling medium CM may flow in the lower space LS and then move to the upper space US. Alternatively, the cooling medium CM may flow in the upper space US and then move to the lower space LS. The lower part of the battery cell 400 may be cooled in the lower space LS, and the upper part of the battery cell 400 may be cooled in the upper space US. As a result, the overall temperature deviation of the plurality of battery cells 400 may be reduced. In addition, the temperature of the plurality of battery cells 400 may be evenly distributed. As a result, the performance of the battery assembly may be improved.

In addition, according to this configuration of the present disclosure, since the cooling efficiency is improved, the output required for the pump circulating the cooling medium CM may be reduced. As the cooling efficiency is improved, the flow rate of the cooling medium CM may be reduced, and the output of the pump may be lowered. As a result, the overall efficiency of the battery assembly may be improved.

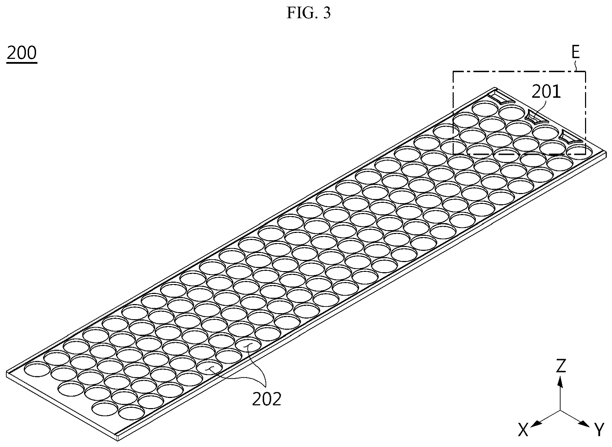

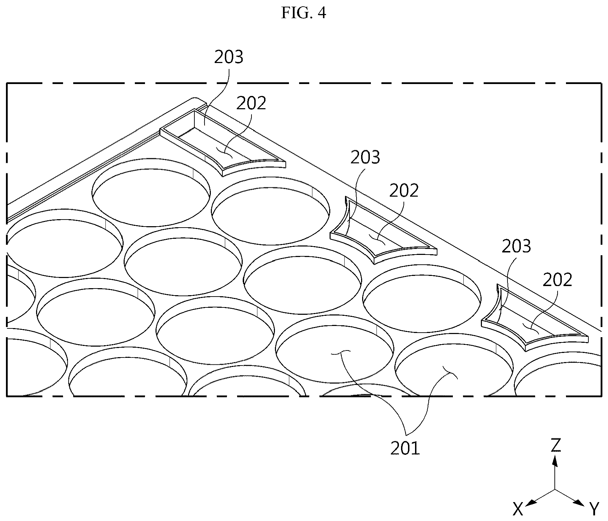

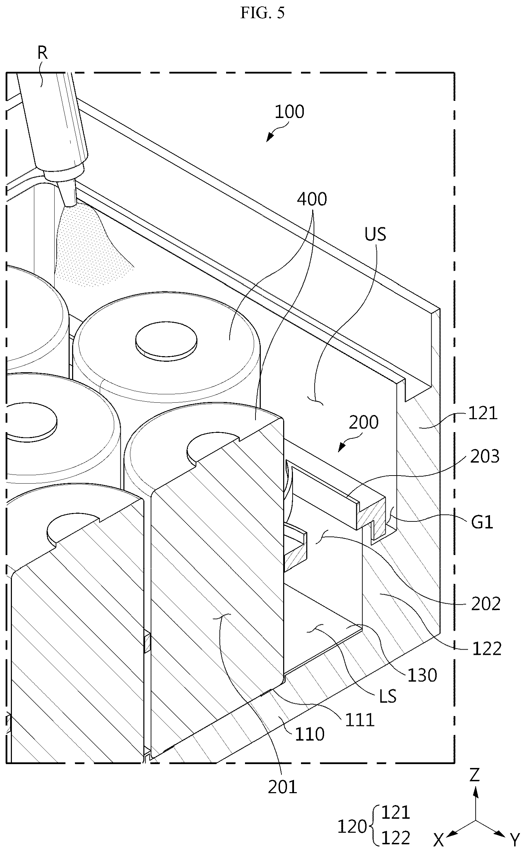

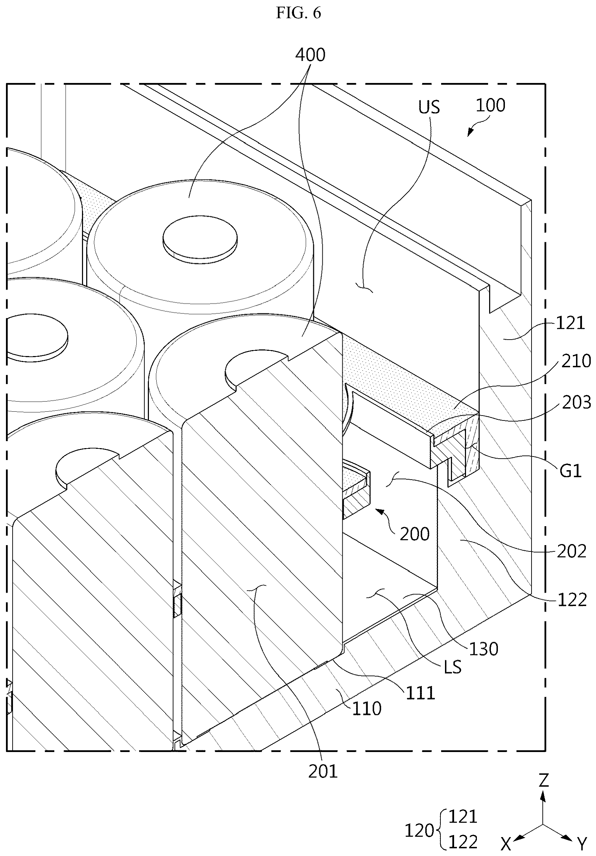

FIG. 3 is a drawing showing a partition plate of the battery assembly of FIG. 2. FIG. 4 is an enlarged drawing of part E of FIG. 3. FIGS. 5 and 6 are drawings showing a partial cross-sectional configuration along the cutting line A-A' of FIG. 1.

Referring to FIGS. 3 to 6, the frame 100 of the battery assembly according to an embodiment of the present disclosure may include a base plate 110 and a peripheral wall 120. The base plate 110 may have a rectangular shape. The peripheral wall 120 may protrude from an upper surface of the base plate 110 in an upper direction or a +Z-axis direction. The peripheral wall 120 may extend along a perimeter of the base plate 110.

The partition plate 200 may be coupled, fastened, attached, fixed or assembled to the inner surface of the peripheral wall 120. The space between the partition plate 200 and the peripheral wall 120 may be sealed.

According to this configuration of the present disclosure, the upper space US and the lower space LS of the battery assembly may be separated and sealed. As a result, the cooling medium CM may have a constant flow path.

Referring to FIGS. 3 to 6, the partition plate 200 of the battery assembly according to an embodiment of the present disclosure may have a communication hole 202. The communication hole 202 may penetrate the partition plate 200. The communication hole 202 may communicate the upper space US and the lower space LS. The communication hole 202 may be provided in plurality. The cooling medium CM may move from the lower space LS to the upper space US through the communication hole 202. Alternatively, the cooling medium CM may move from the upper space US to the lower space LS through the communication hole 202.

At this time, the cooling medium CM may be a liquid. The cooling medium CM may be an electrically insulating liquid. For example, the cooling medium CM may be an insulating oil.

According to this configuration of the present disclosure, the cooling efficiency of the battery assembly may be improved. The cooling medium CM, which flows in the lower space LS and cools the battery cell 400, may move to the upper space US through the communication hole 202. Also, the cooling medium CM may cool the battery cell 400 by flowing in the upper space US.

Referring to FIGS. 3 to 6, the communication hole 202 of the battery assembly according to an embodiment of the present disclosure may be located outside the battery cell 400 located at the outermost side among the plurality of battery cells 400. The plurality of battery cells 400 may be densely packed to form an array. In this case, the communication hole 202 may be located outside the battery array.

According to this configuration of the present disclosure, the cooling efficiency of the battery assembly may be improved. Since the communication hole 202 is located outside the battery cell 400 located at the outermost side, the cooling medium CM may cool all the battery cells 400 in the lower space LS and then move to the upper space US. In addition, the cooling medium CM moved to the upper space US may cool all the battery cells 400 in the upper space US.

Referring to FIGS. 3 to 6, the partition plate 200 of the battery assembly according to an embodiment of the present disclosure may have a first insert hole 201 through which the battery cell 400 penetrates. The first insert hole 201 may be provided in plurality. The first insert hole 201 may be formed to correspond to the battery cell 400 in one-to-one relationship. In addition, the communication hole 202 may be located outside the first insert hole 201.

In addition, the battery assembly may include a first resin layer 210 that seals between the battery cell 400 and the first insert hole 201. The first resin layer 210 may seal the gap between the perimeter of the battery cell 400 and the first insert hole 201. For example, the first resin layer 210 may be any one of a waterproof adhesive, an oil-proof adhesive, or a structural adhesive.

According to this configuration of the present disclosure, the upper space US and the lower space LS of the battery assembly may be separated and sealed. As a result, the cooling medium CM may move from the lower space LS to the upper space US only through the communication hole 202.

Referring to FIGS. 3 to 6, the first resin layer 210 of the battery assembly according to an embodiment of the present disclosure may extend to cover the upper surface of the partition plate 200 and seal between the partition plate 200 and the frame 100. The first resin layer 210 may seal between the partition plate 200 and the peripheral wall 120.

The first resin layer 210 may be formed by applying or potting a resin R onto the upper surface of the partition plate 200 after the partition plate 200, the frame 100, and the battery cell 400 are assembled. The first resin layer 210 may be cured after applying or potting the resin R.

According to this configuration of the present disclosure, the cooling medium CM may move from the lower space LS to the upper space US only through the communication hole 202.

Referring to FIGS. 3 to 6, the partition plate 200 of the battery assembly according to an embodiment of the present disclosure may include a protrusion 203 formed at the perimeter of the communication hole 202. The protrusion 203 may be formed on the upper surface of the partition plate 200. The protrusion 203 may extend along the perimeter of the communication hole 202. The protrusion 203 may be provided in plurality. In addition, the protrusion 203 may be provided to correspond to the communication hole 202 in one-to-one relationship. When a first resin layer 210 is applied or potted on the partition plate 200, the protrusion 203 may prevent the first resin layer 210 from flowing into the communication hole 202. Alternatively, the protrusion 203 may function as a stopper that restricts the flow of the first resin layer 210 when the first resin layer 210 is in a fluid state after being applied or potted. In addition, the thickness of the first resin layer 210 may be formed to be lower than the height of the protrusion 203.

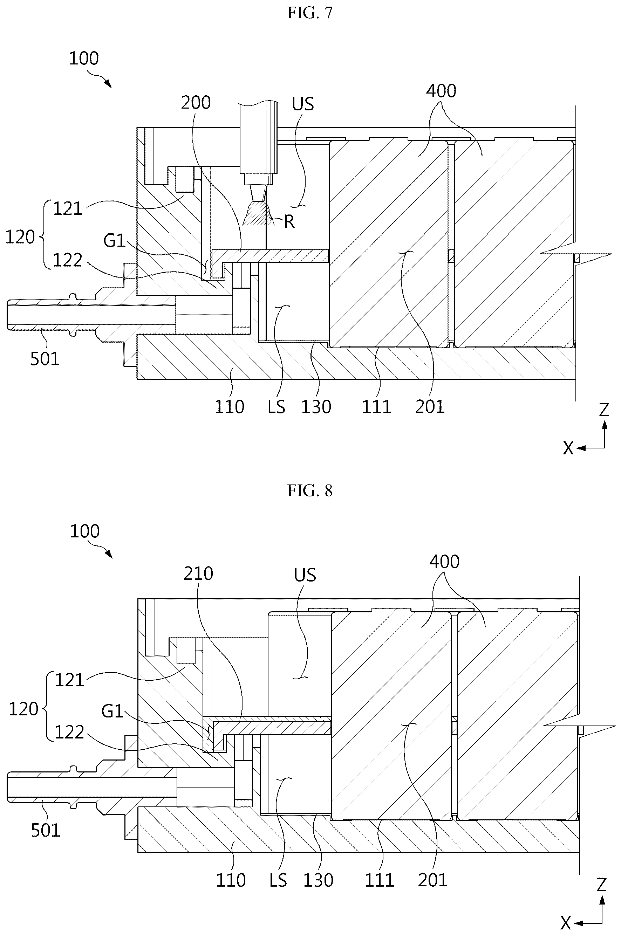

FIGS. 7 and 8 are drawings showing a partial cross-sectional configuration along the cutting line B-B' of FIG. 1. Referring to FIGS. 3 to 8, the battery assembly according to an embodiment of the present disclosure may include a lower port 501. The lower port 501 may be coupled, fastened, attached, fixed, or assembled to the frame 100. Also, the lower port 501 may be in communication with the lower space LS. The cooling medium CM may be supplied to the battery assembly through the lower port 501.

Also, the plurality of battery cells 400 may be positioned between the lower port 501 and the communication hole 202. For example, the lower port 501 may be positioned at the front side of the peripheral wall 120. Also, the communication hole 202 may be positioned at the rear side of the peripheral wall 120. As a result, the cooling medium CM may cool all of the battery cells 400 in the lower space LS and then move to the upper space US.

According to this configuration of the present disclosure, the battery cell 400 may be directly exposed to and in contact with the cooling medium CM. As a result, the cooling efficiency of the battery assembly may be improved.

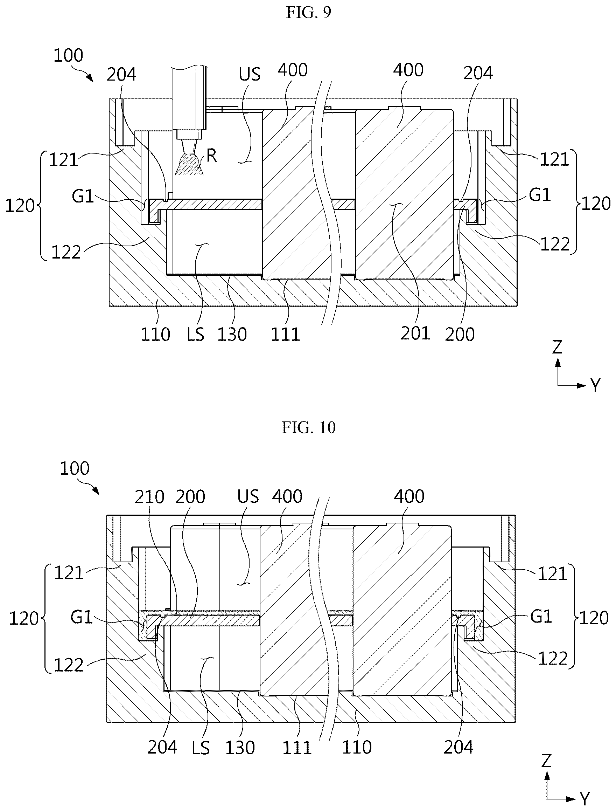

FIGS. 9 and 10 are drawings showing a partial cross-sectional configuration along the cutting line D-D' of FIG. 1. Referring to FIGS. 3 to 10, the peripheral wall 120 of the battery assembly according to an embodiment of the present disclosure may include a second coupling portion 122. The second coupling portion 122 may be formed to protrude inwardly from the peripheral wall 120. The second coupling portion 122 may extend along a perimeter of the partition plate 200 or the base plate 110. The partition plate 200 may be coupled, fastened, attached, fixed, or assembled to the second coupling portion 122. In addition, a first gap G1 may be formed between the partition plate 200 and the second coupling portion 122. The first resin layer 210 may fill the first gap G1. By filling the first resin layer 210 in the first gap G1, the space between the partition plate 200 and the second coupling portion 122 may be sealed. In addition, by filling the first resin layer 210 into the first gap G1, the coupling strength between the partition plate 200 and the second coupling portion 122 may be increased.

Referring to FIGS. 3 to 10, the base plate 110 of the battery assembly according to an embodiment of the present disclosure may have an accommodation groove 111. The accommodation groove 111 may be formed on the upper surface of the base plate 110. At least a part of the battery cell 400 may be inserted into the accommodation groove 111. The accommodation grooves 111 may be provided in plurality. In addition, the accommodation groove 111 may be provided to correspond to the battery cell 400 in one-to-one relationship. The accommodation groove 111 may stably support the battery cell 400.

Also, the adhesive member 130 may be disposed between the battery cell 400 and the accommodation groove 111. The adhesive member 130 may stably fix the battery cell 400.

Referring to FIGS. 9 and 10, the partition plate 200 of the battery assembly according to an embodiment of the present disclosure may have a fixing groove 204. The fixing groove 204 may be formed on the upper surface of the partition plate 200. The fixing groove 204 may form unevenness on the upper surface of the partition plate 200. In addition, the first resin layer 210 may fill the fixing groove 204. As a result, the coupling strength of the first resin layer 210 and the partition plate 200 may be improved.

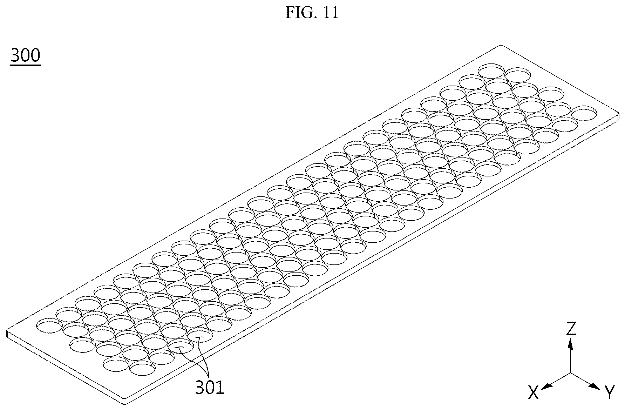

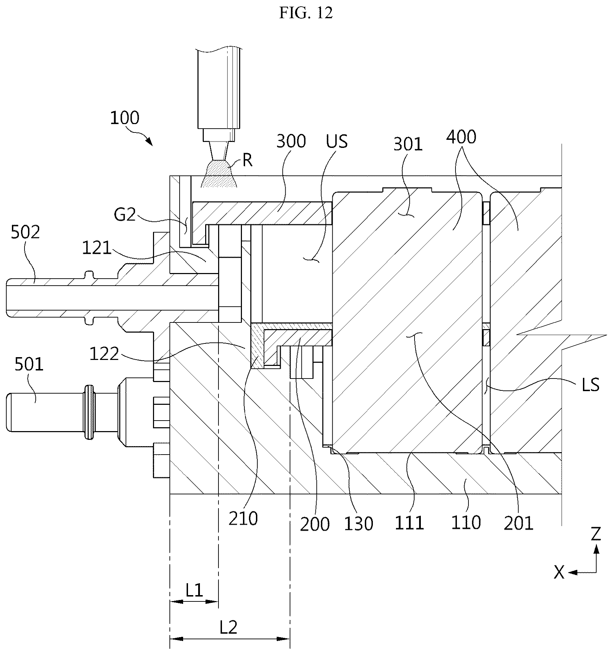

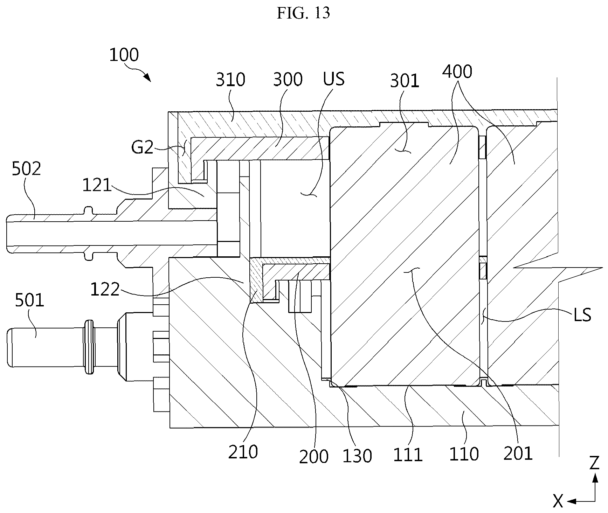

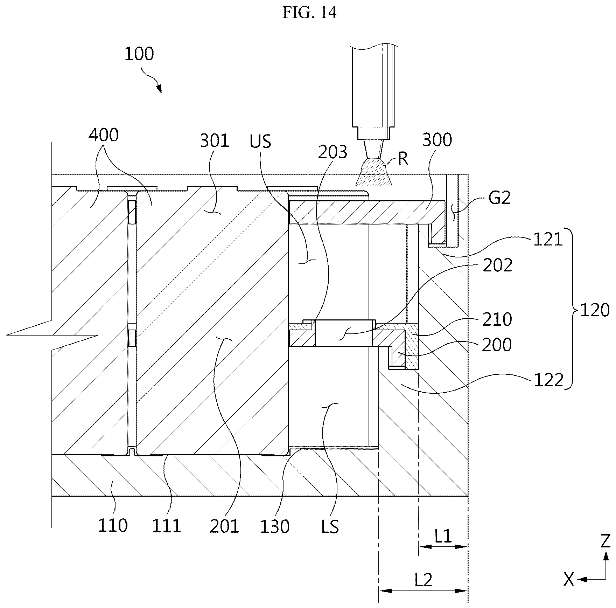

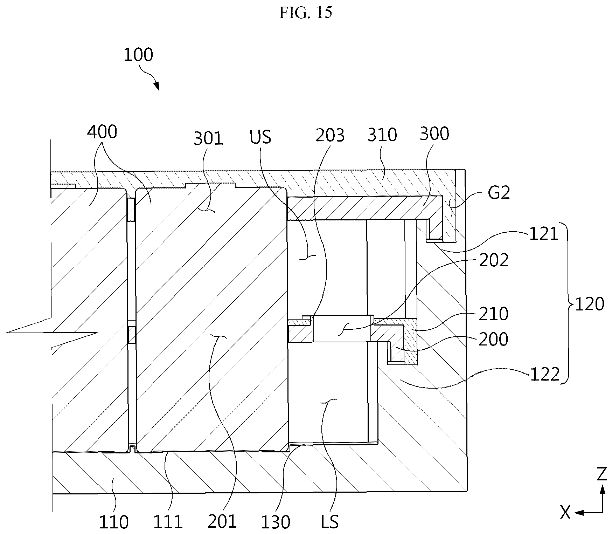

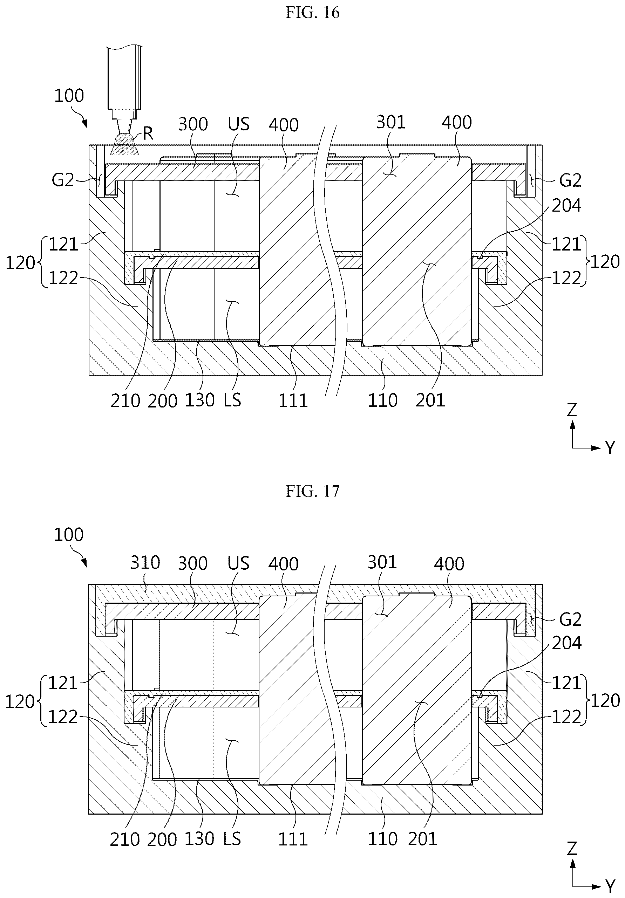

FIG. 11 is a drawing showing a top cover of the battery assembly of FIG. 2. FIGS. 12 and 13 are drawings showing a partial cross-sectional configuration along the cutting line C-C' of FIG. 1. FIGS. 14 and 15 are drawings showing a partial cross-sectional configuration along the cutting line C-C' of FIG. 1. FIGS. 16 and 17 are drawings showing a partial cross-sectional configuration along the cutting line D-D' of FIG. 17.

Referring to FIGS. 11 to 17, the top cover 300 of the battery assembly according to an embodiment of the present disclosure may be coupled, fastened, attached, fixed, or assembled to the inner surface of the peripheral wall 120. Alternatively, the top cover 300 may be coupled, fastened, attached, fixed, or assembled to the peripheral wall 120. The space between the top cover 300 and the peripheral wall 120 may be sealed.

According to this configuration of the present disclosure, the upper space US and the lower space LS of the battery assembly may be separated and sealed. As a result, the cooling medium CM may have a constant flow path.

Referring to FIGS. 11 to 17, the peripheral wall 120 of the battery assembly according to an embodiment of the present disclosure may include a first coupling portion 121. The first coupling portion 121 may be formed to protrude inwardly from the peripheral wall 120. The first coupling portion 121 may be positioned above the second coupling portion 122. The first coupling portion 121 may extend along the perimeter of the partition plate 200 or the base plate 110. In addition, a protruding depth L2 of the second coupling portion 122 may be formed to be larger than a protruding depth L1 of the first coupling portion 121.

The top cover 300 may be coupled, fastened, attached, fixed or assembled to the first coupling portion 121. Also, the space between the first coupling portion 121 and the top cover 300 may be sealed.

According to this configuration of the present disclosure, the assemblability of the battery assembly may be improved. The top cover 300 may be coupled to the first coupling portion 121 after the partition plate 200 is coupled to the second coupling portion 122. Since the second coupling portion 122 protrudes further inward than the first coupling portion 121, the partition plate 200 and the top cover 300 may be sequentially coupled to the frame 100 easily.

Referring to FIGS. 11 to 17, the top cover 300 of the battery assembly according to an embodiment of the present disclosure may be configured to have a larger area than the partition plate 200.

According to this configuration of the present disclosure, the assemblability of the battery assembly may be improved. The top cover 300 may be coupled to the first coupling portion 121 after the partition plate 200 is coupled to the second coupling portion 122. Since the top cover 300 has a larger area than the partition plate 200, the partition plate 200 and the top cover 300 may be sequentially coupled to the frame 100 easily.

Referring to FIGS. 11 to 17, the top cover 300 of the battery assembly according to an embodiment of the present disclosure may have a second insert hole 301 through which the battery cell 400 penetrates. The second insert hole 301 may be provided in plurality. The second insert holes 301 may be formed to correspond to the battery cell 400 in one-to-one relationship.

In addition, the battery assembly may include a second resin layer 310 that seals between the battery cell 400 and the second insert hole 301. The second resin layer 310 may seal the gap between the perimeter of the battery cell 400 and the second insert hole 301. For example, the second resin layer 310 may be any one of a waterproof adhesive, an oil-proof adhesive, or a structural adhesive.

According to this configuration of the present disclosure, the upper space US and the lower space LS of the battery assembly may be separated and sealed. As a result, the cooling medium CM may be prevented from leaking out of the upper space US.

In addition, according to this configuration of the present disclosure, the electrical safety of the battery cell 400 may be improved. Bus bars, power terminals, sensing terminals, etc. that electrically connect the plurality of battery cells 400 may be located on the top cover 300. The second resin layer 310 may block the cooling medium CM from flowing into the bus bars, power terminals, sensing terminals, etc.

Referring to FIGS. 11 to 17, the second resin layer 310 of the battery assembly according to an embodiment of the present disclosure may extend to cover the upper surface of the top cover 300 and seal between the top cover 300 and the frame 100. The second resin layer 310 may seal between the top cover 300 and the peripheral wall 120.

The second resin layer 310 may be formed by applying or potting the resin R onto the upper surface of the top cover 300 after the top cover 300 is assembled to the frame 100. The second resin layer 310 may be cured after applying or potting the resin R.

In addition, a second gap G2 may be formed between the top cover 300 and the first coupling portion 121. The second resin layer 310 may fill the second gap G2. By filling the second resin layer 310 in the second gap G2, the space between the top cover 300 and the first coupling portion 121 may be sealed. In addition, by filling the second resin layer 310 in the second gap G2, the coupling strength between the top cover 300 and the first coupling portion 121 may be increased.

According to this configuration of the present disclosure, the upper space US and the lower space LS of the battery assembly may be separated and sealed. As a result, the cooling medium CM may be prevented from leaking out of the upper space US.

Referring to FIGS. 11 to 17, the battery assembly according to an embodiment of the present disclosure may include an upper port 502. The upper port 502 may be coupled, fastened, attached, fixed, or assembled to the frame 100. Also, the upper port 502 may be in communication with the upper space US. The cooling medium CM may flow out of the battery assembly through the upper port 502.

Also, the plurality of battery cells 400 may be positioned between the upper port 502 and the communication hole 202. For example, the upper port 502 may be positioned at the front side of the peripheral wall 120. Also, the communication hole 202 may be positioned at the rear side of the peripheral wall 120. As a result, the cooling medium CM may cool all of the battery cells 400 in the upper space US and then move to the upper port 502.

According to this configuration of the present disclosure, the battery cell 400 may be directly exposed to and in contact with the cooling medium CM. As a result, the cooling efficiency of the battery assembly may be improved.

FIG. 18 is a drawing showing a cross-sectional configuration along the cutting line C-C' of FIG. 1. Referring to FIG. 18, the battery assembly according to an embodiment of the present disclosure may include a cooling medium CM. The cooling medium CM may flow in the internal space. For example, the cooling medium CM may be supplied to the lower port 501 and may flow in the lower space LS. The cooling medium CM may flow backward or in the -X-axis direction inside the lower space LS. The cooling medium CM may move to the upper space US through the communication hole 202. The cooling medium CM may flow forward or in the +X-axis direction in the upper space US. The cooling medium CM may flow out of the battery assembly through the upper port 502. In this case, the flowing direction of the cooling medium CM in the lower space LS and the flowing direction of the cooling medium CM in the upper space US may be formed in opposite directions.

According to this configuration of the present disclosure, the cooling medium CM may improve the cooling efficiency of the battery cell 400 by forming a counterflow. In addition, the cooling medium CM may reduce the temperature deviation of the plurality of battery cells 400.

In addition, when the battery assembly means a battery pack, the battery assembly according to the present disclosure may further include various components, for example components known at the time of filing of this application, such as a BMS, a bus bar, a relay, a current sensor, etc.

A vehicle according to the present disclosure may include the battery assembly according to the present disclosure described above. The battery assembly according to the present disclosure may be applied to vehicles such as electric vehicles or hybrid vehicles. In addition, the vehicle according to the present disclosure may further include various other components included in a vehicle, such as a body, a motor, and a control device like an ECU (electronic control unit), in addition to the battery assembly.

The terms indicating directions such as upper, lower, left, right, front and rear are used for convenience of description, but it is obvious to those skilled in the art that the terms may change depending on the position of the stated element or an observer.

The present disclosure has been described in detail. However, it should be understood that the detailed description and specific examples, while indicating preferred embodiments of the disclosure, are given by way of illustration only, since various changes and modifications within the scope of the disclosure will become apparent to those skilled in the art from this detailed description.

## Claims

1. A battery assembly comprising:
a frame providing an internal space and having an open top;
a partition plate located inside the frame and configured to divide the internal space into an upper space and a lower space;
a battery cell configured to penetrate the partition plate in an upper and lower direction; and
a top cover configured to cover the upper space and coupled to the frame.

2. The battery assembly according to claim 1,
wherein the partition plate has a communication hole that communicates the upper space and the lower space.

3. The battery assembly according to claim 2,
wherein the battery cell is provided in plurality, and
wherein the communication hole is located outside a battery cell located at an outermost side among the plurality of battery cells.

4. The battery assembly according to claim 2, further comprising:
a lower port coupled to the frame and configured to communicate with the lower space.

5. The battery assembly according to claim 4, further comprising:
an upper port coupled to the frame and configured to communicate with the upper space.

6. The battery assembly according to claim 4, further comprising:
a cooling medium flowing through the internal space,
wherein a flowing direction of a cooling medium flowing in the upper space and a flowing direction of a cooling medium flowing in the lower space are formed in opposite directions.

7. The battery assembly according to claim 1,
wherein the partition plate has a first insert hole through which the battery cell penetrates, and
wherein the battery assembly further comprises a first resin layer that seals between the battery cell and the first insert hole.

8. The battery assembly according to claim 7,
wherein the first resin layer covers an upper surface of the partition plate and extends to seal between the partition plate and the frame.

9. The battery assembly according to claim 1,
wherein the top cover has a second insert hole through which the battery cell penetrates, and
wherein the battery assembly further comprises a second resin layer that seals between the battery cell and the second insert hole.

10. The battery assembly according to claim 9,
wherein the second resin layer covers an upper surface of the top cover and extends to seal between the top cover and the frame.

11. The battery assembly according to claim 1,
wherein the frame includes:
a base plate; and
a peripheral wall protruding upward from an upper surface of the base plate,
wherein the partition plate and the top cover are coupled to the peripheral wall.

12. The battery assembly according to claim 11,
wherein the peripheral wall includes:
a first coupling portion protruding inwardly and coupled with the top cover; and
a second coupling portion protruding further inwardly than the first coupling portion and coupled with the partition plate.

13. The battery assembly according to claim 12,
wherein the first coupling portion and the second coupling portion extend along a perimeter of the base plate.

14. The battery assembly according to claim 1,
wherein the top cover is configured to have a larger area than the partition plate.

15. A vehicle comprising the battery assembly according to any one of claims 1 to 14.
